# EUROPEAN PATENT APPLICATION

(11) **EP 0 987 454 A1**
(43) Date of publication of application: **22.03.2000**
(21) Application number: 98900543.4
(22) Date of filing: 22.01.1998
(51) Int. Cl.: F16C 1/26

(54) **EASY-FASTENING TERMINALS FOR CLOSED HOUSINGS OF CONTROL CABLE SHEATHS**

(30) Priority: 28.01.1997 ES 9700156
(71) Applicant: FICO CABLES, S.A., 08028 Barcelona (ES)
(72) Inventor: CASAS GOMILA, Jordi, E-08028 Barcelona (ES)
(74) Representative: SUGRANES - VERDONCES - FERREGÜELA
(86) International application number: ES9800013
(87) International publication number: WO9832978

(57) **Abstract**

The invention comprises a terminal body (1) through which a steel cable (6) of a control cable can be passed and which is connected to a corresponding sheath end (23), a fastening member (2) a guiding member (3), a retaining member (4) and a closing lid (5), all of which are tubular and coaxially arranged. The fastening member (2), the guiding member (3) and the retaining member (4) are all fitted wit pivotal means enabling simultaneous pivoting and sliding of the fastening element (2) round an axis between a coupling and a fixing position. The guiding member (3) and the retaining member (4) are fitted with axial guiding means enabling the retaining element to slide between three positions, namely positioning, fixing and retention. The invention is designed for use in the automobile industry.

## Description

### Technical field of the invention

The object of the invention is a terminal for quick fixing to closed cavities for control cable sheaths, particularly applicable to control cables habitually used in the automobile industry as linkage elements between a control device and its associated mechanism.

### Background of the invention

Known in the art are an extensive variety of embodiments of control cables of the type made up of a sheathed steel cable in which the steel cable can slide in both directions through the sheath, the ends of the steel cable including a respective steel cable terminal and the sheath ends a respective sheath terminal; the steel cable terminals are attached to a control actuator and its associated mechanism, respectively, such as the accelerator pedal and the corresponding carburettor mechanism of an automobile vehicle, while the sheath terminals are fixed, one or both of them, to a fixed point along the route of the control cable. Frequently, one of the sheath terminals is fixed to a dividing wall, such as a sheet metal dividing wall, which the steel cable of the control cable has to traverse along its route between the control actuator and its associated mechanism; frequently, passage of the steel cable through the dividing wall is implemented by means of a closed-perimeter orifice forming a closed cavity designed to permit fixing of the sheath terminal.

The known embodiments of sheath terminals for fixing in closed cavities generally present as their main disadvantage that they require during fixing of the terminal to the dividing wall the use of intermediate adapter elements and/or screws, which on many occasions, such as occurs in cases where the closed cavity is situated in tight spots which are difficult to gain access to, considerably hinders attachment of the sheath terminal and calls for long fitting times, which in the first place makes possible defective attachment of the sheath terminal to the dividing wall, and in turn, due to the vibration inherent to running conditions of the vehicle, can lead to coming away of the terminal and the consequent loss of operativity of the control cable, and in the second place increases the costs related to fitting the control cable on the vehicle.

### Explanation of the invention

A terminal of new structure and operation for quick fixing to closed cavities for control cable sheaths is made known hereby in order to provide a solution for the above-mentioned disadvantages presented by the known embodiments of sheath terminals for closed cavities, which disadvantages take specific form in the difficulty of fitting in tight places.

The quick fixing terminal of the invention comprises a tubular terminal body which at one of its ends, the front end, has means for fixing one sheath end and through which a steel cable of a control cable can slide, characterized in that it comprises a fixing body, a guiding body, a tubular retaining body and a tubular closure cover arranged coaxially to each other and to the terminal body, with said bodies being able to couple to each other and to the closed cavity and so designed that:
- the fixing body and the closure cover are axially arranged and can be coupled together to form a cavity for the terminal body;
- the guiding body is superimposed on the fixing body and the closure cover, while the retaining body is superimposed on the guiding body;
- the fixing, guiding and retaining bodies include respective and complementary means of rotation which permit simultaneously the rotation and axial movement of the fixing body between two positions, first or coupling position and second or fixing position of the quick fixing terminal, respectively;
- the guiding and retaining bodies include respective and complementary axial guiding means which permit axial movement of the retaining body in both directions and between three positions, a first coupling position, a second fixing position and a third retaining position, respectively, coinciding with the coupling and fixing positions of the fixing body;
- the guiding body and the closed cavity include respective and complementary positioning means;
- the fixing body includes means of fixing to the closed cavity; and
- the retaining body includes retaining means which ensure the coupling and fixing positions of the fixing body,
   all this so designed that,
   the positioning means permit the quick fixing terminal to be situated in a position of coupling with the closed cavity, axial movement of the retaining body from the coupling position to the fixing position simultaneously gives rise to the rotation and axial travel of the fixing body, leaving the dividing wall positioned between the fixing means of the fixing body and the guiding body, while axial movement of the retaining body from the fixing position to the retaining position gives rise to actuation of the retaining means of the retaining body which ensure the position of the fixing body.

The fixing body includes two cylindrical portions of different diameter, a front portion of larger diameter and a rear portion of smaller diameter, respectively, linked to form an exterior step, and an axial orifice in which there are two portions of different diameter, a front portion of larger diameter and a rear portion of smaller diameter, respectively, linked to form an interior step, the front portion of the axial orifice being designed to receive the terminal body which is situated between the interior step and the closure cover.

The guiding body includes two cylindrical portions of different diameter, a front portion of larger diameter and a rear portion of smaller diameter, respectively, and an axial orifice in which there are two portions of different diameter, a front portion of larger diameter and a rear portion of smaller diameter, respectively, designed to receive with a snug fit the front and rear cylindrical portions, respectively, of the fixing body.

The means of rotation include:
- on the rear cylindrical portion of the fixing body, an annular projection which, situated at a relatively short distance from the exterior step, forms a perimetral cavity designed to receive a fixing spring, said cavity containing a support projection, and on its front cylindrical portion two diametrically opposed radial fixing projections;
- on the front portion of the guiding body, two transverse fixing slots, first and second, respectively, each transverse slot being so arranged as to form a certain angle oriented towards the edge of said front portion and defining on same a front end and a rear end, and a support projection on the front portion of the axial orifice; and
- on the retaining body, two transverse fixing slots, first and second, respectively, coinciding with the transverse fixing slots of the guiding body with which they are superimposed, all this so designed that, the support projection of the guiding body is in the fixing spring cavity, the fixing projections are in respective transverse fixing slots of the guiding and retaining bodies, able to slide in both directions, and the fixing spring works permanently under compression with one of its ends resting against the support projection of the fixing body and its other end against the support projection of the guiding body, so that it tends permanently to cause rotation of the fixing body from the coupling position to the fixing position.

The axial guiding means include:
- on the rear portion of the guiding body, a plurality of guiding fins running longitudinally, and on one of the ends of the retaining body, the rear end, longitudinal slots to a number equal to that of the guiding fins and designed to receive the corresponding guiding fins with a snug fit, so that when the guiding and retaining bodies have been coupled together they can move longitudinally in both directions with respect to each other without any possibility of mutual rotation;
- on the rear end of the retaining body, two rear retaining slots running longitudinally which extend from the rear end of the transverse fixing slots towards said rear end, said rear retaining slots being designed to receive a corresponding fixing projection; and
- on the other end of the retaining body, the front end, two front retaining slots running longitudinally and extending from the front end of the transverse fixing slots to said front end, said front retaining slots being designed to receive a corresponding fixing projection,
   all of this so designed that,
   when the fixing projections are in the rear retaining slots, the retaining body occupies the coupling position, the axial movement of the retaining body from the coupling position to the fixing position situates the fixing projections in the rear ends of the transverse fixing slots and, driven by the fixing spring, they slide through said transverse slots until they reach their front ends, thereby causing the rotation and axial sliding of the fixing body which reaches its fixing position, and the axial sliding of the retaining body from the fixing position to the retaining position places the fixing projections in the front retaining slots.

The positioning means include:
- on the free end of the rear portion of the guiding body, a securing crown, and on the front side of said crown and diametrically opposite each other, two positioning projections; and
- in the closed cavity two positioning recesses designed to receive said positioning projections.

The fixing means include, on the free end of the rear portion of the fixing bodies and diametrically arranged, two radial fixing extensions so designed that they can slide through the positioning recesses of the closed cavity.

The retaining means include, in each retaining slot, a retaining recess designed to receive with a snug fit a fixing projection.

### Brief description of the drawings

The drawing sheets of the present specification show the terminal of the invention for quick fixing to closed cavities for control cable sheaths. In said drawings:
Figure 1 is a perspective view of the components of the quick fixing terminal of the invention prior to their mutual coupling;
Figure 2 is a longitudinal section view of the quick fixing terminal of the invention;
Figure 3 is a side view of the fixing body of the quick fixing terminal of the invention;
Figure 4 is a front view of the fixing body of the quick fixing terminal of the invention;
Figure 5 is a view corresponding to section V-V obtained from Figure 3;
Figures 6, 7 and 8 are respective side views of the guiding body of the quick fixing terminal of the invention;
Figure 9 is a front view of the guiding body of the quick fixing terminal of the invention;
Figure 10 is a view corresponding to section X-X obtained from Figure 8;
Figure 11 is a view corresponding to section XI-XI obtained from Figure 8;
Figures 12, 13, 14 and 15 are respective side views of the retaining body of the quick fixing terminal of the invention;
Figure 16 is a view corresponding to section XVI-XVI obtained from Figure 14;
Figure 17 is a view corresponding to section XVII-XVII obtained from Figure 12;
Figure 18 is a cross-section view of the quick fixing terminal of the invention, showing the fixing body and the fixing spring in the coupling position;
Figure 19 is a cross-section view of the quick fixing terminal of the invention, showing the axial guiding means;
Figure 20 is a schematic view of the quick fixing terminal of the invention as supplied ex-works;
Figures 21, 22 and 23 are respective schematic views showing different phases of coupling of the quick fixing terminal to a closed cavity;
Figure 24 is a cross-section view of the quick fixing terminal of the invention, showing the fixing body and the fixing spring in the fixing position; and
Figures 25 and 26 are respective schematic views showing the quick fixing terminal of the invention coupled to a closed cavity.

### Detailed description of the example of embodiment

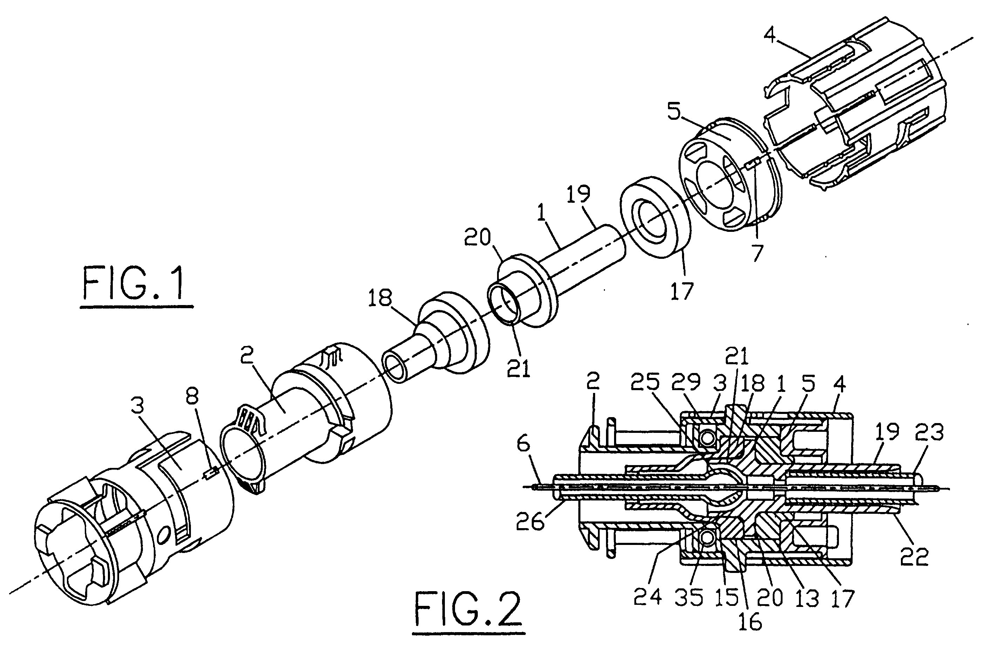

The terminal of the invention for quick fitting to closed cavities for control cable sheaths described as an embodiment includes, as shown in perspective in Figure 1, a terminal body 1, a fixing body 2, a guiding body 3, a retaining body 4 and a closure cover 5, all of them of generally tubular shape open at both ends and couplable to each other so that, as shown in Figure 2, a steel cable 6 of a control cable (not shown) can slide with free play through them in both directions.

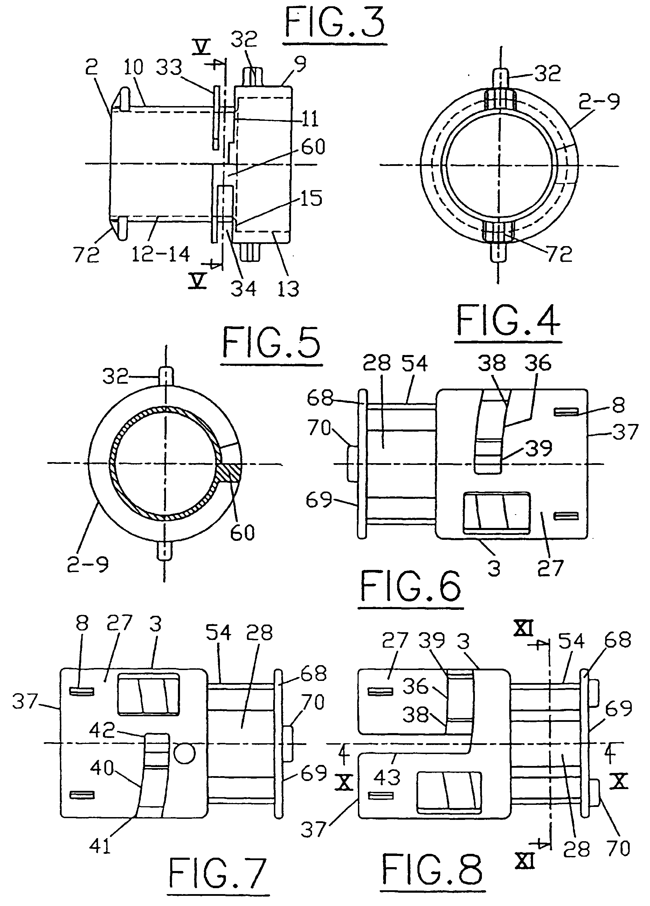

Figure 2 shows how the fixing body 2 and the closure cover 5 are axially coupled; the guiding body 3 is superimposed upon and houses the fixing body 2 and the closure cover 5; and the retaining body 4 is superimposed upon the guiding body 3, the guiding body 3 and the closure cover 5 having respective and complementary means of mutual coupling which include, as shown in Figure 1, on the closure cover 5 a total of four regularly distributed coupling projections 7, three of which are shown, and on the guiding body 3 four coupling orifices 8, one of which is shown in Figure 1 and all four in Figures 6 and 7, designed to receive said projections 7 with a snug fit.

Figure 3 shows how the fixing body 2 comprises two cylindrical portions of different diameter, the front portion 9 of larger diameter and the rear portion 10 of smaller diameter, linked to form an exterior step 11, and to the interior, and shown by broken lines, an axial orifice 12 made up of two portions of different diameter and coinciding with said cylindrical portions 9, 10, a front portion 13 of larger diameter and rear portion 14 of smaller diameter, linked to form an interior step 15.

Figure 2 shows how the coupling of the fixing body 2 with the closure cover 5 forms a cavity 16 defined by the interior step 15 and the front portion 13 of the axial orifice 12 of the fixing body 2 and by the closure cover 5, the cavity being designed to receive the terminal body 1 and, in this example of embodiment, a damper 17 and a retainer 18. Figure 1 shows how the terminal body 1 comprises a front portion 19, a perimetral projection 20 and a rear portion 21, and Figure 2 shows how the front portion 19 includes a cavity 22 designed to receive one end 23 of control cable sheath, and the rear portion 21 includes a semi-spherical cavity 24 designed to receive a corresponding convexly finished end 25 of a pin 26, defining a knuckle joint coupling which permits elastic deformation of the retainer 18 and allows the the pin 26 to be rotated to adapt its position to the changes of direction of the steel cable 6. The damper 17 is mounted between the closure cover 5 and the perimetral projection 20 of the terminal body 1, while the, retainer 18 is mounted between said perimetral projection 20 and the interior step 15 of the fixing body 2. The arrangement of the quick fixing terminal described above with reference to the damper 17, retainer 18 and pin 26, is provided solely by way of non-restrictive example, since it can be understood that the composition of the terminal can be any other without this affecting the essential nature of the invention; for example, the cavity 16 can de designed to house the terminal body 1 without a damper piece or a retainer.

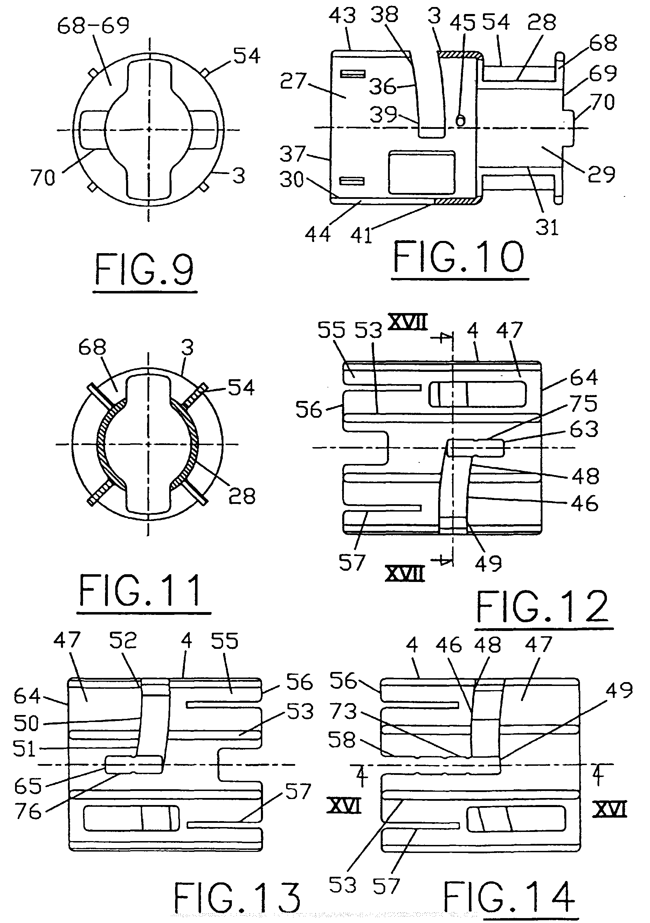

Figure 10 shows in section how the guiding body 3 includes two cylindrical portions of different diameter, a front portion 27 of larger diameter and rear portion 28 of smaller diameter, and to the interior an axial orifice 29 made up of two portions of different diameter and coinciding with the said cylindrical portions 27, 28, a front portion 30 of larger diameter and a rear portion 31 of smaller diameter. As Figure 2 shows, the axial orifice 29 is designed to receive the fixing body 2 with a snug fit in such a way that the latter can slide axially in both directions and/or rotate about its own axis.

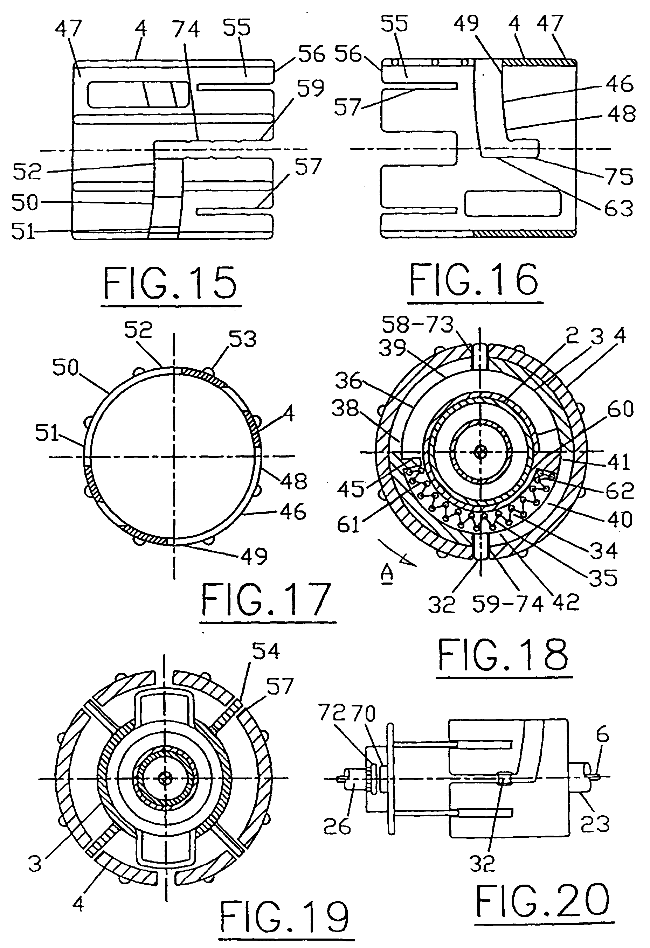

Figures 16 and 17 show how the retaining body 4 is of generally elongated cylindrical shape and is designed to slide with a snug fit on the guiding body 3 in both directions.

The fixing 2, guiding 3 and retaining 4 bodies have respective and complementary means of rotation which include the elements detailed below.

The front portion 9 of the fixing body 2 has two fixing projections 32 diametrically arranged, shown in Figures 3, 4 and 5, while on its rear portion 10 it has an annular projection 33, shown in Figure 3, mounted at a relatively short distance from the exterior step 11 which forms a perimetral cavity 34 designed to receive a fixing spring 35 with a snug fit, as shown in Figures 2, 18 and 24, and a support projection 60, shown in section in Figure 5, which links the annular projection 33 with the exterior step 11.

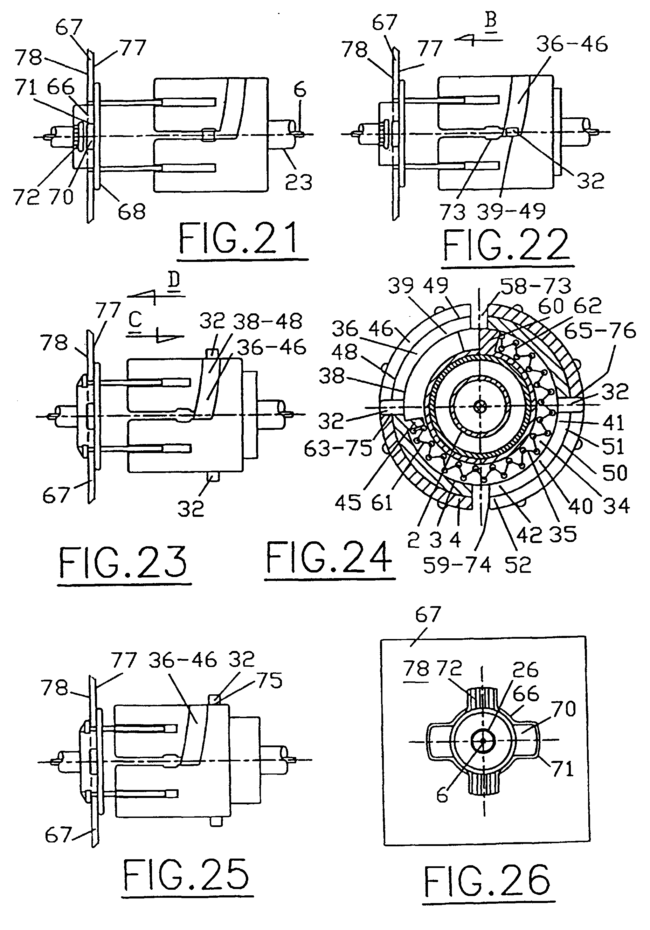

The front portion 27 of the guiding body 3 has a first transverse fixing slot 36, shown in Figures 6, 8 and 10, which forms a slight angle oriented towards the exterior edge 37 of said front portion 27, so that a front end 38 and a rear end 39 are defined in said slot 36. Figure 7 shows how the front portion 27 includes a second transverse fixing slot 40 on which a front end 41 and rear end 42 are defined. Both transverse fixing slots 36, 40 are so designed that, as shown in Figures 18 and 24, the fixing projections 32 of the fixing body 2 can slide through it in both directions between their respective front 38, 41 and rear 39, 42 ends, while it should be noted here that the longitudinal slot 43, shown in Figures 8 and 10, which links the front edge 37 with the front end 38 of the first transverse fixing slot 36, and the longitudinal slot 44, shown in Figure 10, which links the front edge 37 with the front end 41 of the second transverse fixing slot 40, has the purpose of permitting factory coupling of both fixing 2 and guiding 3 bodies. Figure 10 shows how the front portion 27 has to the interior a support projection 45 between the two transverse slots 36, 40 and the rear portion 28, the support projection 45 being so designed that, once the fixing 2 and guiding 3 bodies have been coupled, it is left in the cavity 34 of the fixing spring 35, as shown in Figures 18 and 24.

The retaining body 4 has a first transverse fixing slot 46, shown in Figures 12, 14, 16 and 17, which forms a slight angle, oriented towards one of the ends of said body 4, the front end 47, coinciding with the first transverse fixing slot 36 of the guiding body 3, defining in the first transverse slot 46 a front end 48 and rear end 49. Figures 13, 15 and 17 show how the retaining body 4 has a second transverse fixing slot 50 which forms a slight angle oriented towards the front end 47, coinciding with the second transverse fixing slot 40 of the guiding body 3, on which a front end 51 and a rear end 52 are defined. As shown in Figure 24, both transverse fixing slots 46, 50 are so designed that the fixing projections 32 of the fixing body 2 can slide through them in both directions between their respective front 48, 51 and rear 49, 52 ends. Figures 12 to 15 and 17 show how the retaining body 4 has to the exterior a plurality of regularly distributed longitudinal projections 53 for structural reinforcement.

Figure 18 shows how the fixing spring 35 works permanently under compression with one of its ends, the one marked with reference number 61, resting against the support projection 45 of the guiding body 3, while its other end 62 rests against the support projection 60 of the fixing body 2; under these conditions, the fixing body tends permanently to rotate with respect to the guiding body 3 in the direction marked A.

The guiding 3 and retaining 4 bodies have respective and complementary axial guiding means which include the elements detailed below.

The rear portion 28 of the guiding body 3 has four equal guiding fins 54 mounted longitudinally and regularly distributed which run longitudinally on said portion 28, as shown in Figures 6 to 11.

Starting from its edge 56, the rear end 55 of the retaining body 4 has four longitudinal slots 57, shown in Figures 12 to 16, designed to receive corresponding guiding fins 54 with a snug fit, as shown in Figure 19, so that the retaining body 4 can slide over the guiding body 3 in both directions without any possibility of mutual rotation. Figure 14 shows how on the rear end 55 of the retaining body 4 there is a first rear retaining slot 58 which links the rear edge 56 perpendicularly with the rear end 49 of the first transverse fixing slot 46, and Figure 15 shows how a second rear retaining slot 59 links said rear edge 56 with the rear edge 52 of the second transverse fixing slot 50. Figures 12 and 16 show how the first transverse fixing slot 46 has on its front end 48 a first front retaining slot 63 which runs perpendicularly to the front edge 64, and Figure 13 shows how the second transverse fixing slot 50 has on its front end 51 a second front retaining slot 65 which runs perpendicularly to the front edge 64. The first and second rear retaining slots 63, 65 are designed so that the fixing projections 32 can slide through them as shown in Figures 18 and 24, each of said slots 58, 59, 63 and 65 having a retaining recess 73, 74, 75 and 76, respectively, designed to receive a fixing projection 32 with a snug fit, as shown in said Figures 18 and 24.

The guiding body 3 and the closed cavity 66, shown in front view in Figure 26, made in a dividing wall 67 such as one of sheet metal, have respective and complementary coupling means which include the elements detailed below.

The rear end 28 of the guiding body 3 has a securing crown 68, shown in Figures 6 to 11, which on its front side 69 has two positioning projections 70 diametrically arranged as shown in Figures 8 and 9.

The closed cavity 66 has two diametrically arranged positioning recesses 71 designed to receive the positioning projections 70 of the guiding body 3 as shown in Figure 26.

The free end of the rear portion 10 of the fixing body 2 has two diametrically arranged radial fixing extensions 72, as shown in Figures 3 and 4, said radial extensions 72 being so dimensioned that they can slide through the positioning recesses 71 of the closed cavity 66.

The operation of the terminal of the invention for quick fixing to closed cavities for control cable sheaths described as an example of embodiment is detailed below.

The terminal of the invention for quick fixing is supplied ex-works as shown schematically in Figure 20. Under these conditions: one of the fixing projections 32 is fitted in the retaining recess 73 of the first rear retaining slot 58, and the other retaining projection 32 is in turn fitted in the retaining recess 74 of the second rear retaining slot 59, as shown in section in Figure 18, with the retaining body 4 occupying the coupling position; the fixing spring 35 is compressed as shown in Figure 18 between the support projections 45, 60 of the guiding 3 and fixing 2 bodies, respectively; and the positioning 70 and fixing 72 projections are facing each other as shown in Figure 20.

Mounting of the quick fitting terminal of the invention in the closed cavity 66 simply calls for the following operations:
- firstly, as shown in Figure 21, the positioning 70 and fixing 72 projections are slid through the recesses 71 (shown by broken lines) of the closed cavity 66, leaving the fixing crown 68 resting against the dividing wall 67 on one of its sides, the front side 77, the positioning projections 70 fitted into the recesses 71, and the fixing projections 72 on the other side of the dividing 67 wall at a relatively short distance from its rear side 78;
- the retaining body 4 is then slid in the direction marked B in Figure 22, that is, the retaining body 4 is moved from the retention position to the fixing position, so that the two fixing projections 32 come out of the recesses 73, 74 leaving one projection 32 in the rear ends 39, 49 of the first transverse fixing slots 36, 46 as shown in Figure 22, and leaving the other projection 32 coinciding with the front one in the rear ends 42, 52 of the second transverse fixing slots 40, 50;
- under these conditions, and as shown in Figures 23 and 25, the fixing projections 32, driven by the fixing spring 35, slide through the first and second transverse fixing slots 36-46, 40-50, respectively, until their front ends 38-48 and 41-51 are reached, said sliding of the fixing projections 32 causing the fixing body 2 simultaneously to make two movements, one of rotation about itself and a longitudinal or clamping movement, passing from the coupling position to the fixing position; in the rotation movement the fixing body 2 is rotated through an angle of 90° as shown in Figures 22, 23 and 26, so that the radial fixing extensions 72 which were positioned facing the positioning recesses 71 are situated facing the rear side 78 of the dividing wall 67; and, in the longitudinal or clamping movement, arising from the angle formed by the transverse fixing slots 36-46 and 40-50, the fixing body 2 slides longitudinally in the direction marked C in Figure 23 and in such a way that the radial fixing extensions 72 rest against the rear side 78 of the dividing wall 67 which is subjected to compression between the radial fixing extensions 72 and the fixing crown 68 of the guiding body 3, while it may be noted at this point that the elastic reaction of the fixing spring 35 on the fixing body 2 takes place with the position of the guiding body 3 fixed by the positioning projections 70 fitted into the recesses 71 of the closed cavity 66; and
- finally, the retaining body 4 is slid longitudinally in the direction marked D in Figure 23, that is, from the fixing position to the retaining position, so that the fixing projections 32 slide through the front retaining slots 63, 65 and are left in the retaining recesses 75, 76, respectively, leaving the quick fixing terminal of the invention coupled to the dividing wall 67, this without need of any additional accessory or tool of any type.

## Claims

1. Quick fixing terminal to closed cavities for control cable sheaths, which comprises a tubular terminal body (1) which at one of its ends, the front end (19), has means (22) for fixing one sheath end (23) and through which a steel cable (6) of a control cable can slide, characterized in that it comprises a fixing body (2), a guiding body (3), a tubular retaining body (4) and closure cover (5) arranged coaxially to each other and to the terminal body (1), with said bodies (1,2,3,4) being able to couple to each other and to a closed cavity (66) and so designed that:
- the fixing body (2) and the closure cover (5) are axially arranged and can be coupled together to form a cavity (16) for the terminal body (1);
- the guiding body (3) is superimposed on the fixing body (2) and the closure cover (5), while the retaining body (4) is superimposed on the guiding body (3);
- the fixing (2), guiding (3) and retaining (4) bodies include respective and complementary means of rotation which permit simultaneously the rotation and axial movement of the fixing body (2) between two positions, first or coupling position and second or fixing position of the quick fixing terminal, respectively;
- the guiding (3) and retaining (4) bodies include respective and complementary axial guiding means which permit axial movement of the retaining body (4) in both directions and between three positions, a first coupling position, a second fixing position and a third retaining position, respectively, coinciding with the coupling and fixing positions of the fixing body (2);
- the guiding body (3) and the closed cavity (66) include respective and complementary positioning means;
- the fixing body (2) includes means of fixing to the closed cavity (66); and
- the retaining body (4) includes retaining means which ensure the coupling and fixing positions of the fixing body (2),
all this so designed that,
the positioning means permit the quick fixing terminal to be situated in a position of coupling with the closed cavity (66), axial movement of the retaining body (4) from the coupling position to the fixing position simultaneously gives rise to the rotation and axial travel of the fixing body (2), leaving the dividing wall (67) positioned between the fixing means of the fixing body (2) and the guiding body (3), while axial movement of the retaining body from the fixing position to the retaining position gives rise to actuation of the retaining means of the retaining body (4) which ensure the position of the fixing body (2).

2. Quick fixing terminal as claimed in Claim 1, characterized in that the fixing body (2) includes two cylindrical portions of different diameter, a front portion (9) of larger diameter and a rear portion (10) of smaller diameter, respectively, linked to form an exterior step (11), and an axial orifice (12) in which there are two portions of different diameter, a front portion (13) of larger diameter and a rear portion (14) of smaller diameter, respectively, linked to form an interior step (15), the front portion (13) of the axial orifice (12) being designed to receive the terminal body (1) which is situated between the interior step (11) and the closure cover (5).

3. Quick fixing terminal as claimed in Claims 1 and 2, characterized in that the guiding body (3) includes two cylindrical portions of different diameter, a front portion (27) of larger diameter and a rear portion (28) of smaller diameter, respectively, and an axial orifice (29) in which there are two portions of different diameter, a front portion (30) of larger diameter and a rear portion (31) of smaller diameter, respectively, designed to receive with a snug fit the front (9) and rear (10) cylindrical portions, respectively, of the fixing body (2).

4. Quick fixing terminal as claimed in Claims 1 to 3, characterized in that the means of rotation include:
- on the rear cylindrical portion (10) of the fixing body (2), an annular projection (33) which, situated at a relatively short distance from the exterior step (11), forms a perimetral cavity (34) designed to receive a fixing spring (35), said cavity (34) containing a support projection (60), and on its front cylindrical portion (9) two diametrically opposed radial fixing projections (32);
- on the front portion (27) of the guiding body (3), two transverse fixing slots, first (36) and second (40), respectively, each transverse slot (36-40) being so arranged as to form a certain angle oriented towards the edge (37) of said front portion (27) and defining on same a front end (38, 41) and a rear end (39, 42), and a support projection (45) on the front portion (30) of the axial orifice (29); and
- on the retaining body (4), two transverse fixing slots, first (46) and second (50), respectively, coinciding with the transverse fixing slots (36, 40) of the guiding body (3) with which they are superimposed, all this so designed that,
the support projection (45) of the guiding body (3) is in the fixing spring (35) cavity (34), the fixing projections (32) are in respective transverse fixing slots (36-46, 40-50) of the guiding (3) and retaining (4) bodies, able to slide in both directions, and the fixing spring (35) works permanently under compression with one of its ends (62) resting against the support projection (60) of the fixing body (2) and its other end (61) against the support projection (45) of the guiding body (3), so that it tends permanently to cause rotation of the fixing body (2) from the coupling position to the fixing position.

5. Quick fixing terminal as claimed in Claims 1 to 4, characterized in that the axial guiding means include:
- on the rear portion (28) of the guiding body (3), a plurality of guiding fins (54) running longitudinally, and on one of the ends of the retaining body (4), the rear end (55), longitudinal slots (57) to a number equal to that of the guiding fins (54) and designed to receive the corresponding guiding fins (54) with a snug fit, so that when the guiding (3) and retaining (4) bodies have been coupled together they can move longitudinally in both directions with respect to each other without any possibility of mutual rotation;
- on the rear end (55) of the retaining body (4), two rear retaining slots (58, 59) running longitudinally which extend from the rear end (49, 52) of the transverse fixing slots (46, 50) towards said rear end (55), said rear retaining slots (58, 59) being designed to receive a corresponding fixing projection (32); and
- on the other end of the retaining body (4), the front end (47), two front retaining slots (63, 65) running longitudinally and extending from the front end (48, 51) of the transverse fixing slots (46, 50) to said front end (47), said front retaining slots (63, 65) being designed to receive a corresponding fixing projection (32),
all of this so designed that,
when the fixing projections (32) are in the rear retaining slots (58, 59), the retaining body (4) occupies the coupling position, the axial movement of the retaining body (4) from the coupling position to the fixing position situates the fixing projections (32) in the rear ends (39-49, 42-52) of the transverse fixing slots (36-46, 40-50) and, driven by the fixing spring (35), they slide through said transverse slots (36-46, 40-50) until they reach their front ends (38-48, 41-51), thereby causing the rotation and axial sliding of the fixing body (2) which reaches its fixing position, and the axial sliding of the retaining body (4) from the fixing position to the retaining position places the fixing projections (32) in the front retaining slots (63-65).

6. Quick fixing terminal as claimed in Claims 1 to 5, characterized in that the positioning means include:
- on the free end of the rear portion (28) of the guiding body (3), a securing crown (68), and on the front side (69) of said crown (68) and diametrically opposite each other, two positioning projections (70); and
- in the closed cavity (66) two positioning recesses (71) designed to receive said positioning projections (70).

7. Quick fixing terminal as claimed in Claims 1 to 6, characterized in that the fixing means include, on the free end of the rear portion (10) of the fixing body (2) and diametrically arranged, two radial fixing extensions (72) so designed that they can slide through the positioning recesses (71) of the closed cavity (66).

8. Quick fixing terminal as claimed in Claims 1 to 7, characterized in that the retaining means include, in each retaining slot (58-59, 63-65), a retaining recess (73-74, 75-76) designed to receive with a snug fit a fixing projection (32).
